# EUROPÄISCHE PATENTANMELDUNG

(11) **EP 3 674 071 A1**
(43) Veröffentlichungstag der Anmeldung: **01.07.2020**
(21) Anmeldenummer: 19207427.6
(22) Anmeldetag: 06.11.2019
(51) Int. Cl.: B30B 15/06, B29C 65/78, H01L 21/68

(54) **FÜGESTEMPEL FÜR EINE FÜGEVORRICHTUNG UND FÜGEVORRICHTUNG**

(30) Priorität: 26.11.2018 DE 102018129806
(71) Anmelder: Manz AG, 72768 Reutlingen (DE)
(72) Erfinder: FREUNDT, Martin, 73732 Esslingen (DE)
(74) Vertreter: Kohler Schmid Möbus Patentanwälte

(57) **Zusammenfassung**

Die Erfindung betrifft einen Fügestempel (10) für eine Fügevorrichtung (26) zur Herstellung einer Fügeverbindung, insbesondere einer Klebeverbindung, zwischen einem ersten Fügeteil (102), beispielsweise einem Deckglas, und einem zweiten Fügeteil (104), beispielsweise einem Gehäuse, mit wenigstens einem mit einer Anpresskraft (F) beaufschlagbaren Kraftaufnahmeteil (12) und mit wenigstens zwei Anpressteilen (18) zur Druckbeaufschlagung des ersten Fügeteils (102), wobei die wenigstens zwei Anpressteile (18) jeweils unabhängig voneinander relativ zum Kraftaufnahmeteil (12) kippbeweglich am Fügestempel (10) angeordnet und/oder ausgebildet sind. Des Weiteren betrifft die Erfindung eine Fügevorrichtung (26) mit einem erfindungsgemäßen Fügestempel (10). Die Erfindung ermöglicht es, die beiden Fügeteile (102, 104) einer Sollverteilung der Kräfte bzw. Drücke entsprechend, insbesondere gleichmäßig, aneinander zu pressen. Unebenheiten und Verformungen der Fügeteile (102, 104), insbesondere des ersten Fügeteils (102), können kompensiert werden.

## Beschreibung

Die Erfindung betrifft einen Fügestempel für eine Fügevorrichtung zur Herstellung einer Fügeverbindung, insbesondere einer Klebeverbindung, zwischen einem ersten Fügeteil, beispielsweise einem Deckglas, und einem zweiten Fügeteil, beispielsweise einem Gehäuse.

Smartphones, mobile Computer und dergleichen weisen in der Regel eine Anzeigeeinheit auf. Bei dieser ist üblicherweise ein Deckglas mit einem unter diesem befindlichen Gehäuse und/oder mit einer unter dem Deckglas befindlichen Anzeigeschicht verbunden, insbesondere verklebt.

Um einen möglichst großen Darstellungsbereich der Anzeigeeinheit zu erhalten, erfolgt die Verklebung dabei üblicherweise mit Hilfe eines Klebemittels in einem (möglichst schmalen) Randbereich des Gehäuses bzw. der Anzeigeschicht.

Als Klebemittel kommen insbesondere thermisch aktivierbare Klebefilme, laseraktivierbare Klebemittel und/oder Pressure Activated Adhesives (PSA) zum Einsatz.

Diese Klebemittel erfordern zur Herstellung einer dauerhaften Fügeverbindung definierte Druck- und Temperaturverhältnisse.

Dazu wird zwischen die beiden Fügeteile das jeweilige Klebemittel, insbesondere in den jeweiligen Randbereich, eingebracht und gegebenenfalls, je nach Art des Klebemittels, unter Druck und Temperatur vorgefügt, so dass das Klebemittel an wenigstens einem der beiden Fügeteile angebunden ist. Anschließend werden die beiden Fügeteile mit Hilfe eines Fügestempels druckbeaufschlagt bzw. mit einem definierten Anpressdruck aneinandergepresst, wobei je nach Art des Klebemittels dieses und/oder die Fügeteile gleichzeitig noch zu temperieren sind.

Für eine qualitativ hochwertige Fügeverbindung sollten die auf die Fügeteile ausgeübten Kräfte bzw. Drücke in der Regel möglichst gleichmäßig oder zumindest in vorhersehbarer Weise auf die jeweiligen Randbereiche verteilt wirken.

Häufig sind die Fügeteile jedoch - beispielsweise bei Smartphones aus gestalterischen Gründen - in ihren Randbereichen nicht plan, sondern gekrümmt. Aufgrund von Herstellungstoleranzen weisen die Fügeteile zudem oftmals geringfügige Unebenheiten auf. Durch die Druck- und Wärmebeaufschlagungen während des Fügevorganges können sich die Fügeteile zusätzlich - zumindest lokal - verformen.

Als Folge dieser Störfaktoren kommt es dabei häufig zu ungleichmäßigen, allgemein zu von einer vorgegebenen Sollverteilung abweichenden, Druckverteilungen, sodass bislang die Qualität und Haltbarkeit der Fügeverbindung leiden.

Um eine möglichst große Vielfalt unterschiedlicher Fügeteile bzw. Baugruppen von Fügeteilen verarbeiten zu können, sollte es im Übrigen möglich sein, kostengünstig und schnell individuell angepasste Fügestempel bereitzustellen. Der Fügestempel sollte sowohl für kleine als auch für große Baugruppen, beispielsweise für Baugruppen von Armbanduhren, Smartphones, Rückspiegeln und/oder Fernsehgeräten, verwendbar sein.

Aufgabe der Erfindung ist es daher, einen kostengünstig herstellbaren und vielseitig verwendbaren Fügestempel anzubieten, durch den eine qualitativ besonders hochwertige Fügeverbindung herstellbar ist, sowie eine Fügevorrichtung mit einem solchen Fügestempel bereitzustellen.

Gelöst wird die Aufgabe durch einen Fügestempel für eine Fügevorrichtung zur Herstellung einer Fügeverbindung, insbesondere einer Klebeverbindung, zwischen einem ersten Fügeteil, beispielsweise einem Deckglas, und einem zweiten Fügeteil, beispielsweise einem Gehäuse, mit wenigstens einem mit einer Anpresskraft beaufschlagbaren Kraftaufnahmeteil und mit wenigstens zwei Anpressteilen zur Druckbeaufschlagung des ersten Fügeteils, wobei die wenigstens zwei Anpressteile jeweils unabhängig voneinander relativ zum Kraftaufnahmeteil kippbeweglich am Fügestempel angeordnet und/oder ausgebildet sind.

Ein solcher Fügestempel kann über sein Kraftaufnahmeteil mit einer jeweils gewünschten Anpresskraft beaufschlagt werden. Im Betrieb kann der Fügestempel das erste Fügeteil mittelbar und/oder unmittelbar über wenigstens eines, vorzugsweise über alle, Anpressteile kontaktieren. Dann kann die Anpresskraft über die Anpressteile - insbesondere über deren Kontaktstellen auf dem ersten Fügeteil - räumlich verteilt auf das erste Fügeteil appliziert und so das erste Fügeteil gegen das zweite Fügeteil gepresst werden.

Der Fügestempel kann eingerichtet sein, in einer vertikalen oder zumindest im Wesentlichen vertikalen Richtung zu arbeiten. Dazu kann das Kraftaufnahmeteil im Bereich einer Oberseite des Fügestempels angeordnet und/oder ausgebildet sein. In analoger Weise ist es auch denkbar, dass der Fügestempel eingerichtet ist, in einer nichtvertikalen, insbesondere einer horizontalen oder zumindest im Wesentlichen horizontalen, Richtung zu arbeiten.

Wenigstens ein Anpressteil kann im Bereich einer Unterseite des Fügestempels angeordnet sein. Wenigstens ein Anpressteil kann als Einzelteil ausgebildet sein. Alternativ können ein oder mehrere Anpressteile auch als Teil eines anderen Elements des Fügestempels ausgebildet sein. Wenigstens ein Anpressteil kann aus einem anderen Material ausgebildet sein oder ein anderes Material aufweisen als wenigstens ein anderes Anpressteil. Wenigstens ein Anpressteil kann mit einem anderen Anpressteil, insbesondere unterseitig, verbunden sein. Beispielsweise können wenigstens zwei, insbesondere alle, Anpressteile unterseitig miteinander verbunden sein. Die Verbindung der Anpressteile kann mittels eines elastisch verformbaren Materials, beispielsweise mittels eines gummihaltigen und/oder eines gummiartigen Materials, erfolgen. Dabei bietet der Fügestempel mehrere Freiheitsgrade, entlang derer die wenigstens zwei Anpressteile relativ zum Kraftaufnahmeteil bewegt, insbesondere gekippt, werden können. Somit können sich, wenn der Fügestempel das erste Fügeteil - insbesondere über seine Anpressteile - kontaktiert und dieses druckbeaufschlagt, die Ausrichtungen bzw. Lagen der Anpressteile selbsttätig an die jeweilige lokale Kontur des kontaktierten Fügeteils anpassen. Jedes Anpressteil kann somit jeweils für sich einen in seiner Ausrichtung bzw. Lage anpassbaren Fügestempelfuß bilden. Lokale Unebenheiten und/oder Verformungen des kontaktierten Fügeteils können somit durch mehrere - jeweils gegebenenfalls unterschiedlich ausgerichtete - Anpressteile ausgeglichen werden, sodass Einflüsse dieser Irregularitäten auf die Verteilung der beaufschlagten Kräfte bzw. Drücke minimiert werden. Qualität und Haltbarkeit der mit einem erfindungsgemäßen Fügestempel erzeugten Fügeverbindungen können somit verbessert werden.

Ein solcher Fügestempel weist dennoch eine verhältnismäßig einfache Struktur auf und lässt sich daher kostengünstig herstellen.

Die Geometrie und/oder die Struktur des Fügestempels können in Abhängigkeit einer gewünschten Sollverteilung der beaufschlagten Kräfte bzw. Drücke gewählt sein. Beispielsweise können die Lage und/oder die Position wenigstens eines der beiden Anpressteile relativ zum Kraftaufnahmeteil in Abhängigkeit der gewünschten Sollverteilung gewählt sein.

Der Fügestempel kann wenigstens ein, insbesondere balkenförmiges, Lastleitteil aufweisen, das zwischen wenigstens einem der beiden Anpressteile und dem Kraftaufnahmeteil angeordnet ist, wobei vorzugsweise das Lastleitteil relativ zum Kraftaufnahmeteil kippbeweglich am Fügestempel angeordnet und/oder ausgebildet ist.

Durch Verwendung eines oder mehrerer Lastleitteile können auf einfache Weise mehr als zwei Anpressteile, insbesondere relativ zum Kraftaufnahmeteil kippbeweglich, am Fügestempel angeordnet und/oder ausgebildet werden.

Insbesondere kann der Fügestempel eine Baumstruktur aufweisen. Dazu können mehrere Lastleitteile hierarchisch angeordnet sein. Ein Lastleitteil kann an einem Lastleitteil einer höheren Ebene oder am Kraftaufnahmeteil, insbesondere kippbeweglich, angeordnet und/oder ausgebildet sein. Somit kann die Kraftverteilungsstruktur mehrere Ebenen aufweisen, die insbesondere durch ein oder mehrere Lastleitteile gebildet sein können. Über ein Lastleitteil kann dann, insbesondere nach Art eines umgedrehten Wägebalkens, eine auf das Lastleitteil von einer höheren Ebene eingeleitete Kraft auf Lastleitteile und/oder Anpressteile in einer unter dem Lastleitteil befindlichen Ebene übertragen werden.

Somit kann die Anpresskraft über eine Vielzahl von Anpressteilen verteilt auf das erste Fügeteil übertragen werden. Selbst kleinere lokale Verformungen des Fügeteils können kompensiert werden. Auch lässt sich die Verteilung der Anpresskräfte bzw. Drücke, insbesondere bei einer hohen Anzahl von Anpressteilen, engmaschig einstellen.

Die Anzahl und Höhe der Ebenen kann in Abhängigkeit vom Herstellverfahren, insbesondere in Abhängigkeit der mindestens erforderlichen bzw. minimal herstellbaren Struktur- und/oder Spaltbreiten, und/oder in Abhängigkeit von Materialeigenschaften des Fügestempels, insbesondere seines Elastizitätsverhaltens, gewählt sein. Beispielsweise lassen sich durch Erodieren minimale Spaltbreiten im Bereich von 25 bis 100 µm erzeugen. Somit lassen sich die erforderlichen Strukturen miniaturisieren.

Denkbar ist, dass wenigstens ein Anpressteil und/oder ein Lastleitteil über ein Gelenkteil kippbeweglich am Fügestempel angeordnet und/oder ausgebildet sind. Das Gelenkteil kann dabei unmittelbar am Anpressteil bzw. am Lastleitteil angeordnet bzw. ausgebildet sein. Alternativ kann das Gelenkteil auch vom Anpressteil bzw. vom Lastleitteil beabstandet angeordnet sein. Beispielsweise kann es zwischen zwei Lastleitteilen angeordnet bzw. ausgebildet sein.

Das Gelenkteil kann als separates Einzelteil ausgebildet sein.

Bei einer besonders bevorzugten Ausführungsform der Erfindung kann das Gelenkteil als Engstelle ausgebildet sein. Das Gelenkteil kann allgemein als Teil eines anderen Elements des Fügestempels, beispielsweise eines Lastleitteils, ausgebildet sein. Dazu kann dieser Teil eine Engstelle dieses anderen Elements sein. In diesem Fall ist es günstig, wenn das Material, zumindest im Bereich des Gelenkteils elastisch verformbar ist.

Alternativ oder ergänzend kann das Gelenkteil eingerichtet sein, die Biegesteifigkeit lokal zu reduzieren. Dazu kann das Gelenkteil eine Materialschwächung aufweisen und/oder als eine solche ausgebildet sein. Das Gelenkteil kann eine Kombination unterschiedlicher Materialien aufweisen und/oder aus einer solchen Materialkombination ausgebildet sein. Auch kann das Gelenkteil allgemein eine Form aufweisen, die eingerichtet ist, die Biegesteifigkeit lokal zu reduzieren.

Üblicherweise sind die Querschnitte der zu fügenden Fügeteile, beispielsweise im Falle einer Displayeinheit eines Smartphones, zumindest im Wesentlichen rechteckig. Fallweise, beispielsweise im Falle von Smartwatches, können die Querschnitte der Fügeteile auch zumindest im Wesentlichen elliptisch, insbesondere kreisförmig, sein. Dementsprechend sind auch die Randbereiche, auf die Kräfte bzw. Drücke appliziert werden, üblicherweise rechteckig, elliptisch oder zumindest im Wesentlichen rechteckig bzw. elliptisch.

Vorteilhaft ist es daher, wenn die Anpressteile flächig, insbesondere über eine polygonale, eine zumindest im Wesentlichen polygonale, eine elliptische oder eine zumindest im Wesentlichen elliptische Fläche und/oder entlang einer solchen Flächenkontur, verteilt angeordnet sind. Die Anpressteile können das erste Fügeteil somit nicht nur geradlinig, also beispielsweise lediglich entlang einer Seite des ersten Fügeteils, sondern auch flächig, also beispielsweise entlang der jeweiligen Randbereiche oder zumindest über einen großen Teil der genannten Randbereiche, kontaktieren.

Dazu kann der Fügestempel eine Raumstruktur, beispielsweise eine ringförmige oder polyederförmige Struktur oder zumindest eine im Wesentlichen ringförmige oder polyederförmige Struktur aufweisen. Ein oder mehrere Zwischenteile können dann nicht nur parallel oder im Wesentlichen parallel zueinander und/oder zum Kraftaufnahmeteil verlaufend angeordnet sein. Vielmehr können ein oder mehrere Zwischenteile auch schräg zueinander und/oder zum Kraftaufnahmeteil verlaufend angeordnet sein. Beispielsweise kann ein Zwischenteil zwei längsseitig verlaufende Teilbereiche des Fügestempels verbinden. Somit ergeben sich weitere Einstellmöglichkeiten zur Einstellung der durch den Fügestempel auf das erste Fügeteil applizierten Kraft- bzw. Druckverteilung.

Der Fügestempel kann sich in einer zur Anpressrichtung parallelen Richtung, insbesondere zum Kraftaufnahmeteil hin, verjüngen. Somit kann ein Freiraum für weitere Komponenten einer Fügevorrichtung, in der der Fügestempel verwendet wird, verbleiben oder geschaffen werden. Eine solche weitere Komponente kann beispielsweise ein Heizelement, beispielsweise eine Strahlquelle, insbesondere ein Laser, zum Eintrag von Wärmeenergie in zumindest eines der Fügeteile und/oder in eine zwischen den Fügeteilen befindliche Klebeschicht sein. Alternativ oder ergänzend kann eine Komponente der Fügevorrichtung durch den Freiraum hindurch wirken; beispielsweise kann der Laser durch den Freiraum mit seinem Laserstrahl hindurch auf und/oder durch eines der Fügeteile strahlen.

Zumindest ein Lastleitteil und/oder das Kraftaufnahmeteil können einen Verstärkungsabschnitt, insbesondere zur Versteifung parallel zur Anpressrichtung, aufweisen. Dadurch lässt sich die Biegesteifigkeit des jeweiligen Lastleitteils bzw. des Kraftaufnahmeteils verbessern. Parasitäre Kräfte aufgrund eines Federeffekts, insbesondere aufgrund einer federelastischen Verformung des Lastleitteils bzw. des Kraftaufnahmeteils, können somit vermieden oder zumindest reduziert werden. Das Lastleitteil und/oder das Kraftaufnahmeteil können dazu, insbesondere entlang der Anpressrichtung, als biegesteife Balken ausgebildet sein. Der Verstärkungsabschnitt kann als Verdickung am Lastleitteil bzw. am Kraftaufnahmeteil ausgebildet sein.

Eine besonders flexibel einstellbare Druck- bzw. Kräfteverteilung lässt sich erreichen, wenn wenigstens ein Lastleitteil asymmetrisch gelagert angeordnet und/oder ausgebildet ist. Ist beispielsweise ein balkenförmig ausgebildetes Lastleitteil über ein Gelenkteil an einem anderen Lastleitteil gelagert, so kann vorgesehen sein, dass das Gelenkteil außerhalb der Mitte des balkenförmigen Lastleitteils an diesem angreift. Somit lässt sich die in das balkenförmige Lastleitteil eingeleitete Kraft entsprechend den umgekehrten Verhältnissen der Längen der durch das Gelenkteil abgegrenzten Teile des Lastleitteils zu seiner Gesamtlänge auf eine unter dem balkenförmigen Lastleitteil befindliche Ebene aufteilen und übertragen.

Ein Anpressteil kann unmittelbar an einem Fügeteil angreifen bzw. dieses kontaktieren.

Denkbar ist jedoch auch, dass der Fügestempel im Bereich wenigstens eines der Anpressteile ein, vorzugsweise elastisch verformbares, Kraftübertragungselement aufweist. Das Kraftübertragungselement kann ausgebildet sein, die (Teil-)Anpresskraft des wenigstens einen Anpressteils auf ein darunter befindliches Fügeteil, insbesondere auf das erste Fügeteil, zu übertragen. Das Kraftübertragungselement kann ein Material aufweisen oder aus einem Material ausgebildet sein, das kompatibel zum darunter befindlichen Fügeteil oder zumindest zu dessen Oberfläche ist. Weist beispielsweise das Fügeteil eine Glasoberfläche auf, so kann das Material nichtkratzend gewählt sein.

Das Kraftübertragungselement kann beispielsweise eine zwischen dem Bereich des wenigsten einen Anpressteils und dem jeweiligen Fügeteil befindliche Schicht bilden. Insbesondere kann sich das Kraftübertragungselement, beispielsweise durch seine Elastizität, an die Kontur des Fügeteils anschmiegen. Somit lässt sich eine noch gleichmäßigere Verteilung der auf das Fügeteil übertragenen Kräfte bzw. Drücke erzielen.

Dazu ist denkbar, dass wenigstens ein Anpressteil zumindest abschnittsweise im Kraftübertragungselement eingebettet und/oder einbettbar ist. Hierfür kann das Kraftübertragungselement wenigstens eine Anbindungsstelle zur Aufnahme des wenigstens einen Anpressteils oder zumindest eines Abschnitts des wenigstens einen Anpressteils aufweisen. Dazu kann die Anbindungsstelle als Ausnehmung ausgebildet sein. Die Anbindungsstelle kann zur formschlüssigen Anbindung des Anpressteils eingerichtet sein. Die Anbindungsstelle kann auch eingerichtet sein, das Anpressteil zu verklemmen, zu verankern und/oder zu verrasten. Alternativ oder ergänzend kann das Anpressteil am Kraftübertragungsteil, insbesondere an und/oder in der Anbindungsstelle, angespritzt und/oder angegossen sein.

Bei einer besonders vorteilhaften Klasse von Ausführungsformen der Erfindung kann wenigstens ein Lastleitteil ein steuerbar verformbares Material, beispielsweise ein Bimetall, aufweisen und/oder wenigstens ein Lastleitteil kann aus einem solchen steuerbar verformbaren Material gebildet sein. Ist beispielsweise das steuerbar verformbare Material ein Bimetall, so lässt sich das Lastleitteil durch Aufheizen des steuerbar verformbaren Materials, insbesondere reversibel, verformen. Durch Abkühlen kann die Verformung rückgängig gemacht werden. Zum Aufheizen kann ein Steuerlaser, beispielsweise in Form eines Laserscanners, verwendet werden. Alternativ oder ergänzend kann das Aufheizen auch mittels eines elektrisch betriebenen Heizelements, beispielsweise eines Widerstandselements, erfolgen. Das steuerbar verformbare Material kann auch ein Formgedächtnismaterial sein. Somit ergibt sich eine weitere, insbesondere auch während des Einsatzes des Fügestempels nutzbare, Einstellmöglichkeit zur Einstellung des Fügestempels auf unterschiedliche Geometrien bzw. Konturen eines oder beider Fügeteile. Dazu kann das Lastleitteil eine Steuerfläche zur Aufnahme und/oder Abgabe von Energie, insbesondere Wärme, aufweisen.

Mehrere Lastleitteile und/oder das Kraftaufnahmeteil können zusammen einteilig ausgebildet sein. Insbesondere kann der Fügestempel einteilig ausgebildet sein.

Dazu kann der Fügestempel wenigstens ein durch 3D-Drucken, durch Spritzgießen, durch Fräsen, durch Laserschneiden und/oder durch Erodieren gefertigtes Teil aufweisen. Insbesondere kann der gesamte Fügestempel durch eine oder mehrere dieser Herstellungstechniken gefertigt sein. Beispielsweise kann der Fügestempel als 3D-Druck-Teil ausgebildet sein.

Alternativ oder ergänzend ist es auch denkbar, dass der Fügestempel oder zumindest Teile des Fügestempels aus Einzelteilen montiert sind.

Der Fügestempel, insbesondere wenigstens eines der Lastleitteile und/oder das Kraftaufnahmeteil, können ein oder mehrere Materialien aufweisen oder aus ein oder mehreren Materialien ausgebildet sein.

Wenigstens ein Lastleitteil und/oder das Kraftaufnahmeteil können zumindest abschnittsweise biegeelastisch verformbar ausgebildet sein. Durch Verformung des wenigstens einen Lastleitteils und/oder des Kraftaufnahmeteils können dann Anpressteile kippbewegt werden. Auch hierdurch lassen sich somit die wenigstens zwei Anpressteile jeweils unabhängig voneinander relativ zum Kraftaufnahmeteil kippbeweglich am Fügestempel anordnen.

Denkbar ist ferner, dass, insbesondere zur Einstellung der gewünschten Sollverteilung der beaufschlagten Kräfte bzw. Drücke, wenigstens ein Lastleitteil und/oder das Kraftaufnahmeteil wenigstens eine Wölbung aufweisen und/oder entlang einer jeweiligen Längsrichtung einen veränderlichen Querschnitt aufweisen.

In den Rahmen der Erfindung fällt des Weiteren eine Fügevorrichtung mit einem erfindungsgemäßen Fügestempel. Dabei kann der jeweils verwendete Fügestempel auf die zu fügende Baugruppe, insbesondere an das erste und/oder an das zweite Fügeteil, angepasst sein. Zur Verarbeitung unterschiedlicher Baugruppen können unterschiedliche Fügestempel vorgesehen sein. Unterschiedliche Arten von Baugruppen bzw. Fügeteilen können somit schnell und mit hoher Präzision als auch kostengünstig verarbeitet werden.

Weitere Merkmale und Vorteile der Erfindung ergeben sich aus der nachfolgenden detaillierten Beschreibung der Ausführungsbeispiele der Erfindung, anhand der Figuren der Zeichnung, die erfindungswesentliche Einzelheiten zeigt, sowie aus den Ansprüchen.

Die in der Zeichnung dargestellten Merkmale sind derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

Es zeigen:
- Fig. 1: eine schematische Darstellung zweier über eine Klebeschicht miteinander zu fügender Fügeteile;
- Fig. 2: eine schematische Querschnittsansicht eines Fügestempels;
- Fig. 3: eine schematische Querschnittsansicht eines einteilig ausgebildeten Fügestempels;
- Fig. 4: eine schematische Querschnittsansicht eines Lastleitteils mit einem Verstärkungsabschnitt;
- Fig. 5: eine schematische Darstellung eines ringförmig ausgebildeten Fügestempels in perspektivischer Ansicht;
- Fig. 6 - 9: schematische Darstellungen weiterer Ausführungsformen von Fügestempeln jeweils in perspektivischer Ansicht;
- Fig. 10: eine schematische Querschnittsansicht eines weiteren Fügestempels mit einem Kraftübertragungselement;
- Fig. 11: eine Fügevorrichtung mit einem Steuerlaser;
- Fig. 12: eine schematische Detailansicht auf einen Fügestempel für die Fügevorrichtung gemäß Fig. 11 in perspektivischer Ansicht und
- Fig. 13: eine schematische Detailansicht eines Lastleitteils eines Fügestempels mit einer Steuerfläche und Kühlrippen.

Zur Erleichterung des Verständnisses der Erfindung sind im Folgenden sich funktional entsprechende Elemente mit sich entsprechenden Bezugszeichen markiert.

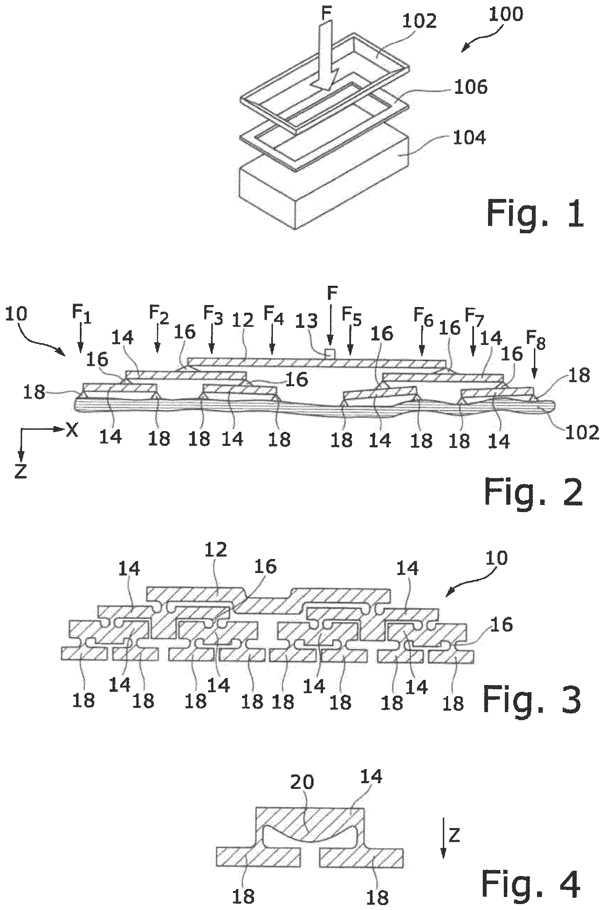

Anhand von **Fig. 1** soll zunächst die Ausgangssituation näher erläutert werden.

Zu sehen ist eine Baugruppe **100,** insbesondere eine Displayeinheit eines Smartphones. Die Baugruppe 100 weist ein erstes Fügeteil **102,** insbesondere ein Deckglas, auf. Das erste Fügeteil 102 bzw. das Deckglas soll mit einem zweiten Fügeteil **104,** z. B. einem Gehäuse des Smartphones, mittels eines Klebemittels **106** zusammengeklebt werden. Das Klebemittel 106 ist im gezeigten Ausführungsbeispiel ein thermisch aktivierbarer Klebefilm. Das Klebemittel 106 ist dazu entlang der Ränder der - im Querschnitt im Wesentlichen rechteckigen - ersten und zweiten Fügeteile 102, 104 zwischen diese eingebracht. Zur Verbindung und zum Aushärten des Klebemittels 106 müssen die beiden Fügeteile 102, 104 mit einer Anpresskraft **F** zusammengepresst werden.

Dazu wird ein Fügestempel von außen auf das erste Fügeteil 102 aufgesetzt. Der Fügestempel wird dann mit der Anpresskraft F beaufschlagt. Das zweite Fügeteil 104 ist dabei beispielsweise entweder durch einen zweiten, analog aufgebauten Fügestempel und/oder durch einen Werkteilträger fixiert.

Um eine möglichst homogene Klebewirkung zu erzielen, ist die Anpresskraft F möglichst gleichmäßig verteilt entlang der Ränder des ersten Fügeteils 102 zu applizieren. Druckbedingte Verformungen als auch geringfügige Welligkeiten des ersten Fügeteils 102 können dabei eine gleichmäßige Kraft- bzw. Druckausübung erschweren.

Je nach Anwendungsfall kann es alternativ erforderlich sein, anstelle einer lediglich gleichmäßigen Verteilung eine vordefinierbare Sollverteilung der auf das oder die Fügeteile einwirkenden Kräfte bzw. Drücke zu erzeugen. Dies kann beispielsweise der Fall sein, wenn die Breite des Klebemittels 106, beispielsweise aufgrund von anderweitig erforderlichen Aussparungen, Schraubverbindungen oder dergleichen, lokal variiert.

Anhand **Fig. 2** soll zunächst der Grundgedanke der Erfindung näher erläutert werden.

Dazu zeigt Fig. 2 eine schematische Darstellung einer ersten Ausführungsform eines Fügestempels **10.** Der Fügestempel 10 weist ein mit der Anpresskraft F entlang einer Richtung **z** beaufschlagbares Kraftaufnahmeteil **12** auf. Das Kraftaufnahmeteil 12 ist als Balken ausgebildet und weist in etwa mittig einen Kraftaufnahmepunkt **13** auf, auf den bei einem Fügevorgang die Anpresskraft F appliziert wird.

Unterhalb des Kraftaufnahmeteils 12 sind mehrere Lastleitteile **14** hierarchisch in mehreren Ebenen, in diesem Fall in zwei Ebenen, angeordnet. Auch die Lastleitteile 14 sind als Balken ausgebildet.

Die Lastleitteile 14 sind über Gelenkteile **16** am jeweils über ihnen befindlichen Element, d. h. an einem darüber befindlichen Lastleitteil 14 oder am Kraftaufnahmeteil 12, kippbeweglich angeordnet. Sie sind somit relativ zum Kraftaufnahmeteil 12 kippbeweglich am Fügestempel 10 angeordnet.

An den Lastleitteilen 14 der untersten Ebene sind jeweils zwei Anpressteile **18** angeordnet. Mit den Anpressteilen 18 kontaktiert der Fügestempel 10 in der Situation gemäß Fig. 2 das erste Fügeteil 102, das auf das zweite Fügeteil 104 (Fig. 1) gepresst werden soll.

Durch die kippbeweglichen Anordnungen der Lastleitteile 14 sind die Anpressteile 18 zumindest unabhängig von den an den jeweils anderen Lastleitteilen 14 angeordneten Anpressteilen 18 relativ zum Kraftaufnahmeteil 12 kippbeweglich am Fügestempel 10 angeordnet. Denkbar ist, dass alternativ oder ergänzend die Anpressteile 18 unmittelbar kippbeweglich an den jeweiligen Lastleitteilen 14 der untersten Ebene angeordnet, insbesondere gelagert, sind.

Zur Verdeutlichung sind in Fig. 2 Verformungen des ersten Fügeteils 102 während des Fügevorganges stark vergrößert dargestellt.

Zu erkennen ist, dass bei Beaufschlagung des Kraftaufnahmeteils 12 mit der Anpresskraft F die Anpressteile 18 jeweils mit Teilkräften F1 bis F8 an ihren jeweiligen Kontaktstellen auf das erste Fügeteil 102 pressen bzw. an dieses die jeweiligen Teilkräfte F1 bis F8 übertragen.

Durch die kippbeweglichen Anordnungen der Lastleitteile 14 können die Lastleitteile 14 derart verkippen, dass alle Anpressteile 18 trotz der Verformungen des ersten Fügeteils 102 auf diesem aufliegen. Somit wird ein gleichmäßiger Krafteintrag in das erste Fügeteil 102 ermöglicht.

In diesem Ausführungsbeispiel verläuft der Fügestempel 10 mit seinen Lastleitteilen 14 und damit mit seinen Anpressteilen 18 im Wesentlichen geradlinig entlang einer zur Richtung z senkrechten, insbesondere horizontalen, Richtung **x.**

**Fig.** 3 zeigt ein weiteres Ausführungsbeispiel eines Fügestempels 10. Dieser Fügestempel 10 ist einteilig ausgebildet. Dazu ist dieser Fügestempel 10 mittels 3D-Druck gefertigt.

Die kippbewegliche Anordnung der Lastleitteile 14 an den jeweils anderen Lastleitteilen 14 bzw. dem Kraftaufnahmeteil 12 wird dadurch erzielt, dass die jeweiligen Gelenkteile 16 - von denen aus Vereinfachungsgründen in Fig. 3 lediglich zwei mit einem Bezugszeichen versehen sind - als Engstellen ausgebildet sind. Der Fügestempel 10 ist zudem aus einem elastischen oder zumindest beschränkt elastischen Material, beispielsweise aus Metall, ausgebildet, um ein Brechen im Bereich einer der Engstellen bei Beaufschlagung mit der Anpresskraft F zu vermeiden.

Die Lastleitteile 14 lassen sich somit relativ zum Kraftaufnahmeteil 12 kippen, indem das jeweilige Gelenkteil 16 bzw. die jeweilige Engstelle (reversibel) verbogen wird.

Fig. 3 ist ferner zu entnehmen, dass bei diesem Fügestempel 10 zusätzlich die Anpressteile 18 ebenfalls jeweils über ein Gelenkteil 16, das wiederum als Engstelle ausgebildet ist, an den jeweils darüberliegenden Lastleitteilen 14, d. h. an den Lastleitteilen 14 der untersten Ebene, kippbeweglich gelagert ausgebildet sind.

**Fig. 4** zeigt eine schematische Detailansicht eines Lastleitteils 14 mit daran angeordneten Anpressteilen 18. Zu erkennen ist insbesondere, dass das Lastleitteil 14 balkenförmigen ausgebildet ist. Es weist in einem mittleren Bereich einen Verstärkungsabschnitt **20** auf. Der Verstärkungsabschnitt 20 ist durch Verdickung entlang der Richtung z ausgebildet. Durch den Verstärkungsabschnitt 20 ist die Biegesteifigkeit des Lastleitteils 14 erhöht.

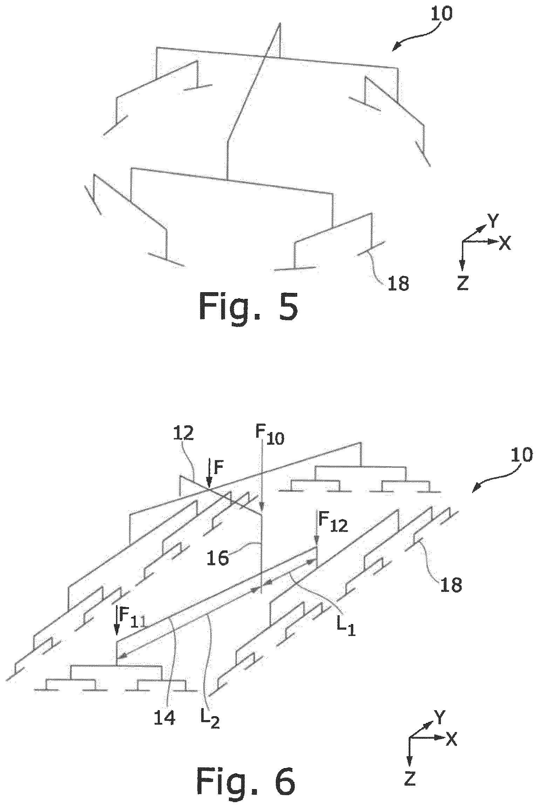

In den folgenden **Fig. 5** bis **Fig. 9** sind weitere Ausführungsformen von Fügestempeln 10 abgebildet. Zur Vereinfachung ist in Fig. 5 bis Fig. 9 stellvertretend für alle anderen Anpressteile 18 jeweils nur ein Anpressteil 18 mit einem Bezugszeichen versehen.

Bei diesen Ausführungsformen sind die jeweiligen Anpressteile 18 flächig, insbesondere über eine polygonale, eine zumindest im Wesentlichen polygonale, eine elliptische oder eine zumindest im Wesentlichen elliptische Fläche senkrecht zur Richtung z und parallel zu einer durch die Richtung x und eine zu den Richtungen x und z senkrechte Richtung **y** aufgespannten Ebene, verteilt angeordnet.

Der Fügestempel gemäß Fig. 5 weist eine ringförmige Raumstruktur auf. Seine Anpressteile 18 sind dazu über eine kreisförmige Fläche verteilt angeordnet. Er eignet sich beispielsweise zur Verarbeitung von im Querschnitt kreisförmigen Fügeteilen wie sie beispielsweise bei Uhren, insbesondere Smartwatches, vorkommen.

Fig. 6, Fig. 7 und Fig. 8 sowie Fig. 9 zeigen unterschiedliche Fügestempel 10, die bei im Wesentlichen im Querschnitt rechteckigen Fügeteilen verwendet werden können.

Zu erkennen ist jeweils, dass sich mithilfe der Lastleitteile 14, von denen in den Fig. 6 bis 9 jeweils nur einzelne beispielhaft mit Bezugszeichen versehen sind, sowie durch die Kraftaufnahmeteile 12 Kräfte auch zwischen unterschiedlichen Teilbereichen der jeweiligen Fügestempel 10 verteilen lassen. Insbesondere können die jeweiligen Anpresskräfte F auch auf unterschiedliche, nicht geradlinig zueinander angeordnete Teilbereiche, beispielsweise zwischen unterschiedlichen Längsseiten, verteilt werden.

Durch Wahl einer jeweiligen Raumstruktur lassen sich somit die Fügestempel 10 individuell an die jeweiligen Anforderungen der Fügeteile 102 beziehungsweise 104 (beide Fig. 1) anpassen.

Eine weitere Möglichkeit, die Verteilung der Anpresskraft F auf die Anpressteile 18 einzustellen beziehungsweise zu steuern, ergibt sich durch asymmetrische Lagerung der Lastleitteile 14 wie beispielhaft anhand von Fig. 6 näher erläutert wird.

Dazu zeigt Fig. 6 ein Lastleitteil 14, das über ein Gelenkteil 16 am Kraftaufnahmeteil 12 kippbeweglich gelagert ist. Dazu greift das Gelenkteil 16 jedoch nicht mittig, sondern in einem Längenverhältnis **L1** zu **L2** am Lastleitteil 14 an. Somit ergibt sich eine Verteilung einer auf das Gelenkteil 16 einwirkenden Teilkraft **F10** in Teilkräfte **F11** und **F12** entsprechend den Verhältnissen der Längen L1 bzw. L2 zur Gesamtlänge L1+L2.

Bei dem Fügestempel 10 gemäß Fig. 6, der beispielsweise zum Fügen von Fügeteilen einer Displayeinheit verwendet werden kann, ist zu erkennen, dass entlang seiner Schmalseiten weniger Anpressteile 18 angeordnet sind als entlang seiner Breitseiten. Würden somit alle Lastleitteile 14 jeweils mittig mit Kräften beaufschlagt, würden die Anpressteile 18 jeweils mit unterschiedlichen Kräften auf das erste Fügeteil 102 (Fig. 1) pressen.

Eine gleichmäßige Verteilung oder eine andere gewünschte Sollverteilung der von den Anpressteilen 18 ausgeübten Kräfte bzw. Drücke lässt sich jedoch durch geeignete, in der Regel nicht mittige Positionierung der Gelenkteile 16 an den jeweils zugeordneten Lastleitteilen 14 erreichen.

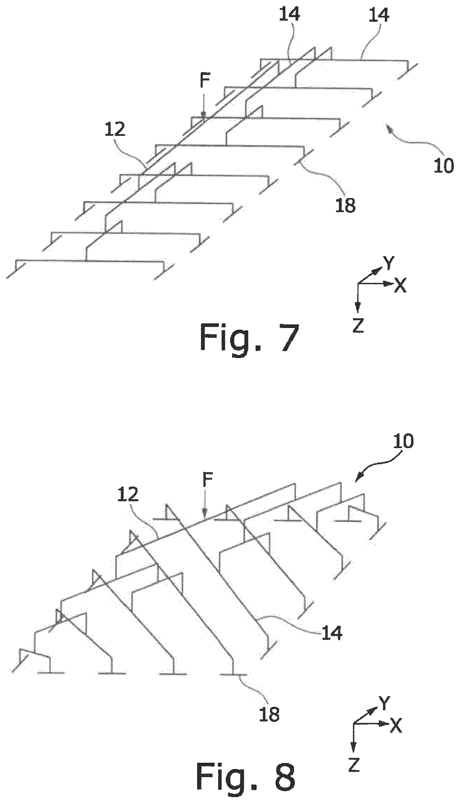

Der Fügestempel 10 gemäß Fig. 7 zeigt eine zweireihige Anordnung der Anpressteile 18.

Der Fügestempel 10 gemäß Fig. 8 zeigt eine Anordnung der Anpressteile 18 entlang eines Quadrats.

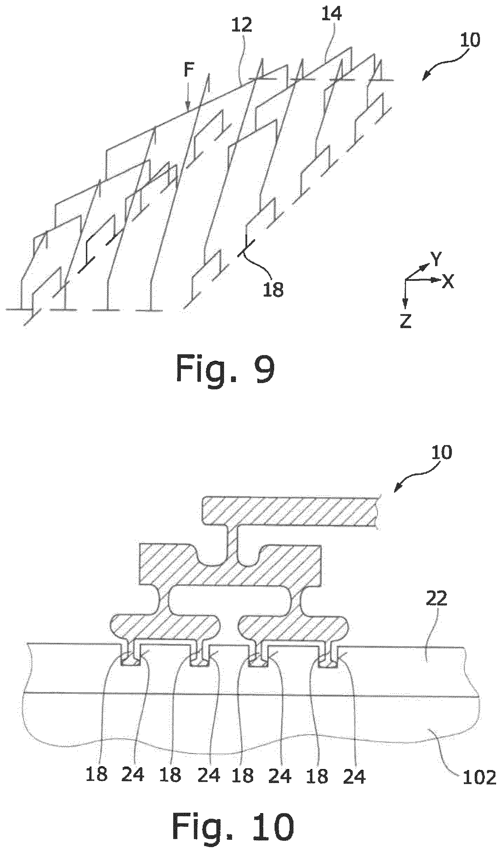

Der Fügestempel 10 gemäß Fig. 9 zeigt eine Anordnung der Anpressteile 18 entlang eines Rechtecks. Auch hier unterscheiden sich die Anzahlen der Anpressteile 18 entlang der Schmalseiten von denen der Breitseiten.

**Fig. 10** zeigt eine schematische Querschnittsansicht eines Ausschnitts eines weiteren Fügestempels 10, der auf das erste Fügeteil 102 presst.

Zu erkennen ist, dass zwischen dem Fügestempel 10 und dem ersten Fügeteil 102 ein Kraftübertragungselement **22** angeordnet ist. Das Kraftübertragungselement 22 ist dabei aus einem elastischen Material, beispielsweise einem Polymer, gebildet. Die Anpressteile 18 befinden sich zumindest abschnittsweise jeweils in als Ausnehmungen ausgebildeten Anbindungsstellen **24** des Kraftübertragungselements 22.

Durch die Elastizität des Kraftübertragungselement 22 schmiegt sich das Kraftübertragungselement 22 an das erste Fügeteil 102 an. Das Kraftübertragungselement 22 wirkt somit als elastische Vermittlungsschicht. Somit ist bei diesem Fügestempel 10 eine zusätzlich verbesserte, besonders gleichmäßige Kraftverteilung bzw. Druckverteilung erzielbar.

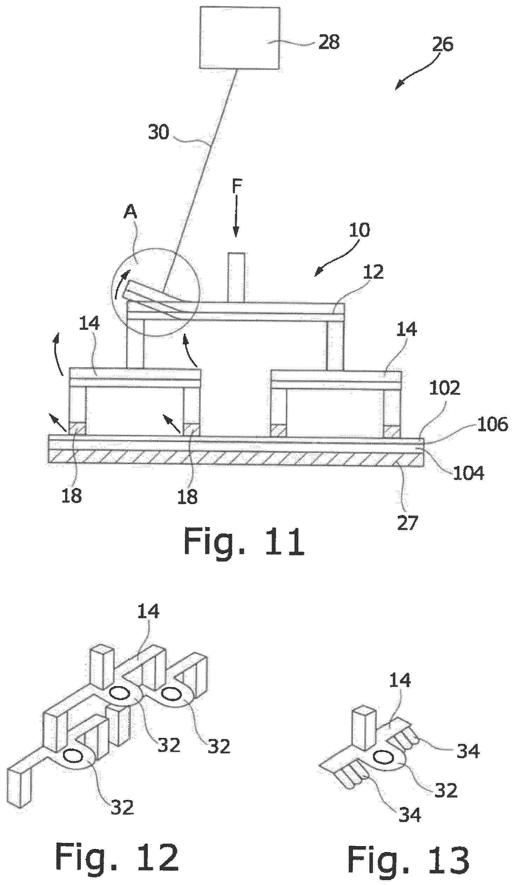

**Fig. 11** zeigt eine Fügevorrichtung **26** mit einem weiteren Fügestempel 10 in schematischer Darstellung. Zu erkennen ist, dass der Fügestempel 10 die zwei Fügeteile 102, 104 mit einer dazwischen befindlichen Schicht des Klebemittels 106 zusammenpresst. Dazu ist das zweite Fügeteil 104 auf einem Werkteilträger **27** der Fügevorrichtung 26 fixiert.

Eine Besonderheit des hier dargestellten Fügestempels 10 besteht darin, dass seine Lastleitteile 14 sowie sein Kraftaufnahmeteil 12 aus einem steuerbar verformbaren Material, insbesondere aus einem Bimetall, ausgebildet sind. Ein Steuerlaser **28,** in diesem Fall ein Laserscanner, kann somit mit einem Steuerstrahl **30** bedarfsweise das Kraftaufnahmeteil 12 und/oder ein oder mehrere der Lastleitteile 14, insbesondere punktuell, erhitzen. Dadurch kommt es - wie im Ausschnitt **A** skizziert - zu einer Verformung des jeweiligen Kraftaufnahmeteils 12 bzw. des jeweiligen Lastleitteils 14, sodass die in Fig. 11 mit Bezugszeichen markierten Anpressteile 18 (geringfügig) angehoben werden.

Kühlt das Kraftaufnahmeteil 12 wieder ab, gelangt es wieder in seine Ausgangsform zurück, wodurch auch die Anpressteile 18 wieder in ihre Ausgangsposition zurückverlagert werden.

Somit lässt sich die Kraftverteilung bei diesem Fügestempel 10 temporär, insbesondere während eines Fügevorgangs, durch entsprechende Steuerung des Steuerlasers 28 individuell anpassen.

Vorzugsweise sind die Lastleitteile 14 und/oder das Kraftaufnahmeteil 12 bei dieser Ausführungsform des Fügestempels 10 biegeelastisch ausgebildet. Ferner können zumindest die Lastleitteile 14, die durch ein solches, durch Erhitzen bzw. Kühlen zu steuerndes Lastleitteil 14 bzw. Kraftaufnahmeteil 12 verlagert werden sollen, bei dieser Ausführungsform drehfest mit dem jeweils darüber befindlichen Lastleitteil 14 bzw. dem Kraftaufnahmeteil 12 verbunden sein. Dadurch kann vermieden werden, dass durch - insbesondere schwerkraftbedingtes - Verkippen der Lastleitteile 14 während einer Verlagerung durch Erwärmen bzw. Kühlen die Verlagerung teilweise oder vollständig kompensiert und damit die gewünschte Steuerungswirkung reduziert oder sogar aufgehoben wird.

Um bei einer solchen Ausführungsform eines Fügestempels 10 den Wärmeeintrag und/oder den Wärmeaustrag verbessern zu können, können - wie in **Fig. 12** und **Fig. 13** dargestellt - Lastleitteile 14 mit Steuerstellen **32** und/oder mit Kühlrippen **34** (Fig. 13) versehen werden.

Zur Erwärmung bzw. Aktivierung eines solchen Lastleitteils 14 kann dann der Laserstrahl 30 (Fig. 11) auf die jeweilige Steuerstelle 32 gerichtet werden. Im Gegenzug lassen sich die Lastleitteile 14 mittels der Kühlrippen 34 rasch abkühlen und somit auch nach Abschalten des Laserstrahls 30 schnell wieder in ihre Ausgangsform zurücksetzen.

### Bezugszeichenliste

- 10: Fügestempel
- 12: Kraftaufnahmeteil
- 13: Kraftaufnahmepunkt
- 14: Lastleitteil
- 16: Gelenkteil
- 18: Anpressteil
- 20: Verstärkungsabschnitt
- 22: Kraftübertragungselement
- 24: Anbindungsstelle
- 26: Fügevorrichtung
- 27: Werkteilträger
- 28: Steuerlaser
- 30: Steuerstrahl
- 32: Steuerstelle
- 34: Kühlrippe
- 100: Baugruppe
- 102: erstes Fügeteil
- 104: zweites Fügeteil
- 106: Klebemittel
- A: Ausschnitt
- F: Anpresskraft
- F1 bis F11: Teilkraft
- x, y, z: Richtung

## Patentansprüche

1. Fügestempel (10) für eine Fügevorrichtung (26) zur Herstellung einer Fügeverbindung, insbesondere einer Klebeverbindung, zwischen einem ersten Fügeteil (102), beispielsweise einem Deckglas, und einem zweiten Fügeteil (104), beispielsweise einem Gehäuse,
- mit wenigstens einem mit einer Anpresskraft (F) beaufschlagbaren Kraftaufnahmeteil (12)
- und mit wenigstens zwei Anpressteilen (18) zur Druckbeaufschlagung des ersten Fügeteils (102),
- wobei die wenigstens zwei Anpressteile (18) jeweils unabhängig voneinander relativ zum Kraftaufnahmeteil (12) kippbeweglich am Fügestempel (10) angeordnet und/oder ausgebildet sind.

2. Fügestempel nach Anspruch 1, **dadurch gekennzeichnet, dass** der Fügestempel (10) wenigstens ein, insbesondere balkenförmiges, Lastleitteil (14) aufweist, das zwischen wenigstens einem der beiden Anpressteile (18) und dem Kraftaufnahmeteil (12) angeordnet ist, wobei vorzugsweise das Lastleitteil (14) relativ zum Kraftaufnahmeteil (12) kippbeweglich am Fügestempel (10) angeordnet und/oder ausgebildet ist.

3. Fügestempel nach einem der vorhergehenden Ansprüche, **dadurch gekennzeichnet, dass** wenigstens ein Anpressteil (18) und/oder ein Lastleitteil (14) über ein Gelenkteil (16) kippbeweglich am Fügestempel (10) angeordnet und/oder ausgebildet ist.

4. Fügestempel nach dem vorhergehenden Anspruch, **dadurch gekennzeichnet, dass** das Gelenkteil (16) als Engstelle ausgebildet ist.

5. Fügestempel nach einem der vorhergehenden Ansprüche, **dadurch gekennzeichnet, dass** die Anpressteile (18) flächig, insbesondere über eine polygonale, eine zumindest im Wesentlichen polygonale, eine elliptische oder eine zumindest im Wesentlichen elliptische Fläche und/oder entlang einer solchen Flächenkontur, verteilt angeordnet sind.

6. Fügestempel nach einem der vorhergehenden Ansprüche, **dadurch gekennzeichnet, dass** sich der Fügestempel (10) in einer zur Anpressrichtung parallelen Richtung (x, y, z), insbesondere zum Kraftaufnahmeteil (12) hin, verjüngt.

7. Fügestempel nach einem der vorhergehenden Ansprüche, **dadurch gekennzeichnet, dass** zumindest ein Lastleitteil (14) einen Verstärkungsabschnitt (20), insbesondere zur Versteifung parallel zur Anpressrichtung, aufweist.

8. Fügestempel nach einem der vorhergehenden Ansprüche, **dadurch gekennzeichnet, dass** wenigstens ein Lastleitteil (14) asymmetrisch gelagert angeordnet und/oder ausgebildet ist.

9. Fügestempel nach einem der vorhergehenden Ansprüche, **dadurch gekennzeichnet, dass** der Fügestempel (10) im Bereich wenigstens eines der Anpressteile (18) ein, vorzugsweise elastisch verformbares, Kraftübertragungselement (22) aufweist.

10. Fügestempel nach dem vorhergehenden Anspruch, **dadurch gekennzeichnet, dass** wenigstens ein Anpressteil (18) zumindest abschnittsweise im Kraftübertragungselement (22) eingebettet und/oder einbettbar ist.

11. Fügestempel nach einem der vorhergehenden Ansprüche, **dadurch gekennzeichnet, dass** wenigstens ein Lastleitteil (14) ein steuerbar verformbares Material, beispielsweise ein Bimetall, aufweist und/oder dass wenigstens ein Lastleitteil (14) aus einem solchen steuerbar verformbaren Material gebildet ist.

12. Fügestempel nach einem der vorhergehenden Ansprüche, **dadurch gekennzeichnet, dass** mehrere Lastleitteile (14) und/oder das Kraftaufnahmeteil (12) zusammen einteilig ausgebildet sind.

13. Fügestempel nach einem der vorhergehenden Ansprüche, **dadurch gekennzeichnet, dass** der Fügestempel (10) wenigstens ein durch 3D-Drucken, durch Spritzgießen, durch Fräsen, durch Laserschneiden und/oder durch Erodieren gefertigtes Teil aufweist.

14. Fügestempel nach einem der vorhergehenden Ansprüche, **dadurch gekennzeichnet, dass** wenigstens ein Lastleitteil (14) und/oder das Kraftaufnahmeteil (12) zumindest abschnittsweise biegeelastisch verformbar ausgebildet sind.

15. Fügevorrichtung (26) mit einem Fügestempel (10) nach einem der vorhergehenden Ansprüche.
